# EUROPEAN PATENT APPLICATION

(11) **EP 2 982 712 A1**
(43) Date of publication of application: **10.02.2016**
(21) Application number: 14751614.0
(22) Date of filing: 14.02.2014
(51) Int. Cl.: C08L 65/00, B32B 27/00, C08J 7/04, C08K 5/08, C08L 83/04, C09D 5/24, C09D 165/00, C09D 183/04, C09D 201/00, H01B 1/12, H01B 1/20

(54) **CURABLE ANTISTATIC ORGANOPOLYSILOXANE COMPOSITION AND ANTISTATIC SILICONE FILM**

(30) Priority: 15.02.2013 JP 2013028163
(71) Applicant: Shin-Etsu Polymer Co. Ltd., Tokyo 101-0041 (JP); Nissin Chemical Industry Co., Ltd., Fukui 915-0802 (JP)
(72) Inventor: FUJIKI, Hironao, Saitama-shi Saitama 331-0811 (JP); MATSUBAYASHI, Sou, Saitama-shi Saitama 331-0811 (JP); KANTO, Kohei, Saitama-shi Saitama 331-0811 (JP); SUZUKI, Takanori, Echizen-shi Fukui 915-0802 (JP)
(74) Representative: Schäfer, Matthias W.
(86) International application number: PCT/JP2014/000751
(87) International publication number: WO 2014/125826

(57) **Abstract**

[Purpose] To provide a curable antistatic organopolysiloxane composition capable of alleviating problems originating from amine compounds and problems originating from water, and to provide an antistatic silicone film formed by curing said composition.

[Solution] This invention relates to: a curable antistatic organopolysiloxane composition which contains (I) a conductive polymer composition which is pseudo-solubly dispersed in a solvent consisting mainly of an organic solvent and which contains (a) a π-conjugated conductive polymer, (b) polyanions doping the n-conjugated conductive polymer (a), and (c) a reaction product of those anions of the polyanions (b) that were not needed for doping, and an oxirane group- and/or oxetane group-containing organic compound, and (II) a curable organopolysiloxane composition; and an antistatic silicone film which is formed by supplying said composition onto a substrate and curing the same.

## Description

### Cross reference

The present application claims the priority based on Japanese Patent Application No. 2013-028163 filed on February 15, 2013 in Japan, the content of which is herein incorporated. In addition, the contents described in Patents, Patent Applications and Literatures cited in the present application are herein incorporated.

### Technical Field

The present invention relates to a curable antistatic organopolysiloxane composition that can be cured by a condensation reaction, an electron beam curing reaction, a hydrosilylation reaction, or the like to form a siloxane film excellent in antistatic performances, and an antistatic silicone film formed by curing the composition.

### Background Art

A π-conjugated conductive polymer whose main chain includes a conjugated system containing π electrons is generally synthesized by an electropolymerization method or a chemical oxidative polymerization method. In the electropolymerization method, a mixed solution of an electrolyte serving as a dopant and a precursor monomer for formation of a π-conjugated conductive polymer is prepared, electrodes are placed in the solution and also a support such as an electrode material formed in advance is immersed therein, and a voltage is applied between the electrodes to thereby form a π-conjugated conductive polymer in the form of a film on the surface of the support. The electropolymerization method is thus needed to use an apparatus for electropolymerization and is performed by batch production, and therefore is poor in mass productivity. On the other hand, in the chemical oxidative polymerization method, there are no such limitations as described above, and an oxidant and an oxidative polymerization catalyst can be added to a precursor monomer for formation of a π-conjugated conductive polymer, to thereby produce a large amount of a π-conjugated conductive polymer in a solution.

In the chemical oxidative polymerization method, however, as the conjugated system of the main chain forming the π-conjugated conductive polymer is grown, the π-conjugated conductive polymer is poorer in solubility in a solvent, and therefore is obtained in the form of a solid powder that is insoluble in a solvent. Therefore, it is difficult to form a film of the π-conjugated conductive polymer, having a uniform thickness, on various substrates such as a plastic substrate by a procedure such as coating. There have been attempted based on such reasons a method of introducing a functional group to the π-conjugated conductive polymer to allow the polymer to be solubilized in a solvent, a method of dispersing the π-conjugated conductive polymer in a binder resin to allow the polymer to be solubilized in a solvent, a method of adding an anion group-containing polymeric acid to the π-conjugated conductive polymer to allow the polymer to be solubilized in a solvent, and the like.

For example, in order to enhance the solubility of the π-conjugated conductive polymer in water, there is known a method of subjecting 3,4-dialkoxythiophene to chemical oxidative polymerization using an oxidant in the presence of polystyrenesulfonic acid having a molecular weight of 2,000 to 500,000 as the anion group-containing polymeric acid, to produce an aqueous poly(3,4-dialkoxythiophene) solution (see, for example, Patent Literature 1). There is also known a method of subjecting a precursor monomer for formation of the π-conjugated conductive polymer to chemical oxidative polymerization in the presence of polyacrylic acid, to produce an aqueous colloidal π-conjugated conductive polymer solution (see, for example, Patent Literature 2).

Furthermore, there is also proposed a method of producing a conductive solution that can be solubilized or dispersed in an organic solvent to be mixed with an organic resin. As one example thereof, there are known a solution of polyaniline in an organic solvent, and a production method thereof (see, for example, Patent Literature 3). There is also known a solvent replacement method by phase transition from a solution containing a polyanion and a true conductive polymer in water to an organic solvent (see, for example, Patent Literature 4, Patent Literature 5, Patent Literature 6 and Patent Literature 7). There is also known a method of dissolving a freeze-dried true conductive polymer in an organic solvent (see, for example, Patent Literature 8). These methods, however, have the problem of mixing with other organic resin as in the example of polyaniline, and additionally the problem of limitation to a solvent system containing a large amount of water. Even when a small amount of water or substantially no water is contained, there is the following problem: an amine compound is used to thereby cause color tone to be deteriorated over time in the case of mixing with the resin, and cause doping of the conductive polymer with the polyanion to be gradually withdrawn by amine, resulting in deterioration in conductivity over time, as in the cases of the above Literatures (see, for example, Patent Literature 4, Patent Literature 5, Patent Literature 6 and Patent Literature 7). Furthermore, in the case where a conductive polymer is mixed with an addition curing type silicone resin, there is the following disadvantage: curing inhibition due to amine occurs to insufficiently cure a silicone resin. On the other hand, in the case where a conductive polymer is mixed with a condensation curing type silicone resin, there is the following disadvantage: a phenomenon in which amine involves in condensation of silanol or an alkoxysilyl group occurs to deteriorate preservation properties.

There has been conventionally demanded for imparting an antistatic function to a silicone composition having high insulation properties in a peeling application or a pressure-sensitive adhesive application in the silicone industry. In order to respond to such a demand, a method has been conventionally attempted in which a carbon powder, a metal powder, and an ionic conductive substance are added to a silicone composition. Such a method, however, does not currently satisfy many functions such as transparency of a silicone resin, peeling performances, pressure-sensitive adhesion performances, and humidity dependence resistance of conductivity. While a technique is known in which a conductive polymer in the form of an emulsion is mixed with a silicone resin emulsion (see, for example, Patent Literature 9 and Patent Literature 10), the product by this technique is a water dispersion, and therefore is limited in terms of practicality and also has the disadvantages of corrosion of equipment due to water, insufficient adhesiveness, and the like.

### Citation List

### Patent Literature

Patent Literature 1: Japanese Patent Laid-Open No. 07-090060
Patent Literature 2: Japanese Patent Laid-Open No. 07-165892
Patent Literature 3: International Publication No. WO2005/052058
Patent Literature 4: Japanese Patent Laid-Open No. 2006-249303
Patent Literature 5: Japanese Patent Laid-Open No. 2007-254730
Patent Literature 6: Japanese Patent Laid-Open No. 2008-045061
Patent Literature 7: Japanese Patent Laid-Open No. 2008-045116
Patent Literature 8: Japanese Patent Laid-Open No. 2011-032382
Patent Literature 9: Japanese Patent Laid-Open No. 2002-241613
Patent Literature 10: Japanese Patent Laid-Open No. 2003-251756

### Summary of Invention

### Technical Problem

The conventional conductive solution described above, however, cannot overcome the above disadvantages derived from an amine type compound when an amine type compound is used for phase transition of the conductive polymer from an aqueous phase to an organic phase. In addition, the water dispersion has the disadvantages of being low in practicality and also easily causing corrosion due to water.

An object of the present invention is to provide a curable antistatic organopolysiloxane composition that can reduce the problem derived from an amine type compound and the problem derived from water, as well as an antistatic silicone film formed by curing the composition.

### Solution to Problem

In order to achieve the above object, the present inventors have developed a completely new technique in which no amine type compound is used and an oxirane type or oxetane type compound is used to enable phase transition from an aqueous phase to an organic phase, thereby leading to completion of the present invention. Specific solutions to the problems are as follows.

A curable antistatic organopolysiloxane composition for achieving the above object includes a conductive polymer composition (I) that includes (a) a π-conjugated conductive polymer, (b) a polyanion with which the π-conjugated conductive polymer (a) is doped, and (c) a reaction product of an anion other than the anion required for doping in the polyanion (b) with an oxirane group and/or oxetane group-containing organic compound, and that is dispersible and soluble in a solvent mainly containing an organic solvent, and a curable organopolysiloxane composition (II).

Another embodiment provides the curable antistatic organopolysiloxane composition, in which the curable organopolysiloxane composition (II) is an addition curing type composition.

Another embodiment provides the curable antistatic organopolysiloxane composition, in which the curable organopolysiloxane composition (II) is a condensation curing type composition.

Another embodiment provides the curable antistatic organopolysiloxane composition, in which the curable organopolysiloxane composition (II) is an electron beam curing type composition.

Another embodiment provides the curable antistatic organopolysiloxane composition, in which the π-conjugated conductive polymer (a) has at least one or more repeating unit selected from the group consisting of polypyrroles, polythiophenes, polyacetylenes, polyphenylenes, polyphenylenevinylenes, polyanilines, polyacenes, polythiophenevinylenes, and copolymers of two or more thereof.

Another embodiment provides the curable antistatic organopolysiloxane composition, in which the π-conjugated conductive polymer (a) is poly(3,4-ethylenedioxythiophene) or polypyrrole.

Another embodiment provides the curable antistatic organopolysiloxane composition, in which the polyanion (b) includes one or a mixture of two or more selected from a sulfonic acid group, a phosphoric acid group and a carboxyl group.

Another embodiment provides the curable antistatic organopolysiloxane composition, in which the polyanion (b) includes polystyrenesulfonic acid, polyvinylsulfonic acid, polyacrylic acid alkylenesulfonic acid, poly(2-acrylamido-2-methyl-1-propanesulfonic acid), or one or more thereof as a copolymerization constituent.

Another embodiment provides the curable antistatic organopolysiloxane composition further including an organic solvent.

An antistatic silicone film of an embodiment of the present invention is a layer formed by supplying the curable antistatic organopolysiloxane composition of any of the above embodiments onto a substrate and curing the composition.

### Advantageous Effect of Invention

The present invention can provide a curable antistatic organopolysiloxane composition that can reduce the problem derived from an amine type compound and the problem derived from water, as well as an antistatic silicone film formed by curing the composition.

### Description of Embodiments

Hereinafter, respective embodiments of the curable antistatic organopolysiloxane composition and the antistatic silicone film of the present invention are described.

### <Embodiment of curable antistatic organopolysiloxane composition>

### 1. Conductive polymer composition

A conductive polymer composition (I) included in a curable antistatic organopolysiloxane composition of an embodiment of the present invention is a composition that includes (a) a π-conjugated conductive polymer, (b) a polyanion with which the π-conjugated conductive polymer (a) is doped, and (c) a reaction product of an anion other than the anion required for doping in the polyanion (b) with an oxirane group and/or oxetane group-containing organic compound, and that is dispersible and soluble in a solvent mainly containing an organic solvent. A true conductive polymer doped with, as a dopant, a polyanion for use in the present application is formed from a fine particle having a particle size of about several tens nanometers. Such a fine particle is transparent in a visible light region due to the presence of the polyanion, also serving as a surfactant, and appears to be dissolved in the solvent. The fine particle is actually dispersed in the solvent, but such a state is referred to as "dispersed and solubilized" in the present application. The solvent here is a solvent mainly containing an organic solvent. The phrase "mainly containing an organic solvent" here means that the content of an organic solvent in the solvent is more than 50%. In particular, the solvent preferably contains an organic solvent and water in a weight ratio ranging from 90 : 10 to 100 : 0.

### 1.1 Production method

The conductive polymer composition can be produced by the following method as an example.

### (1) Production method from solution of conductive polymer/polyanion complex water dispersion

A conductive polymer/polyanion complex water dispersion is obtained by subjecting an aqueous solution or a water dispersion, in which a monomer for the conductive polymer and a dopant coexist, to polymerization in the presence of an oxidant. Herein, not only polymerization of such a monomer is performed, but also a commercially available conductive polymer/dopant water dispersion may be used. Examples of the commercially available conductive polymer/dopant water dispersion can include a PEDOT/PSS water dispersion (product name: Clevios) from Heraeus Holding and a PEDOT/PSS water dispersion (product name: Orgacon) from Agfa-Gevaert Group.

The conductive polymer composition is obtained by adding to the water dispersion an oxirane group or oxetane group-containing compound together with a solvent, then reacting an anion with an oxirane group or oxetane group, and thereafter subjecting a reaction liquid to concentration, separation by filtering, or concentration to dryness. Thereafter, suitably, the resulting concentrate or solid is solubilized or dispersed in the solvent mainly containing an organic solvent and used in the form of a coating material. The conductive polymer composition may also be solubilized or dispersed in the solvent mainly containing an organic solvent after a step of adding to the water dispersion an oxirane group or oxetane group-containing compound together with a solvent, then adding a water-insoluble organic solvent thereto to perform phase transition of the conductive polymer composition to a water-insoluble solvent phase during or after a reaction of an anion with an oxirane group or oxetane group, and if necessary subjecting the resultant to a dehydration step or the like.

### (2) Production method from freeze-dried conductive polymer/polyanion complex solid

An appropriate amount of water and/or a solvent for dissolving the oxirane group or oxetane group-containing compound is added to the conductive composition that is in the form of the polyanion with which the π-conjugated conductive polymer solidified is doped, and thereafter an anion is reacted with an oxirane group or oxetane group. Thereafter, a reaction liquid is subjected to concentration, separation by filtering, or concentration to dryness, to provide the conductive polymer composition. Thereafter, suitably, the resulting concentrate or solid is solubilized or dispersed in the solvent mainly containing an organic solvent and used.in the form of a coating material. The conductive polymer composition may also be solubilized or dispersed in the solvent mainly containing an organic solvent in the above production after a step of reacting an anion with an oxirane group or oxetane group, then adding a water-insoluble organic solvent thereto to perform phase transition of the conductive polymer composition to a water-insoluble solvent phase, and if necessary subjecting the resultant to a dehydration step or the like. In the method (2), the freeze-dried conductive composition is thus used as a raw material, and therefore the time for the concentration step can be particularly shortened.

### 1.2 Raw material for conductive polymer composition

### (a) π-Conjugated conductive polymer

As the π-conjugated conductive polymer, an organic polymer can be used without any limitation as long as the main chain thereof includes a π-conjugated system. Examples can suitably include polypyrroles, polythiophenes, polyacetylenes, polyphenylenes, polyphenylenevinylenes, polyanilines, polyacenes, polythiophenevinylenes, and copolymers of two or more thereof. In particular, polypyrroles, polythiophenes or polyanilines can be suitably used in terms of ease of polymerization and stability in the air. In the present invention, while the π-conjugated conductive polymer is sufficiently high in conductivity and compatibility with a binder even when being not substituted, a functional group such as an alkyl group, an alkenyl group, a carboxyl group, a sulfo group, an alkoxyl group, a hydroxyl group, or a cyano group may be introduced in order to enhance conductivity, and dispersibility or solubility in a binder.

Suitable examples of the π-conjugated conductive polymer include polypyrrole, poly(N-methylpyrrole), poly(3-methylpyrrole), poly(3-ethylpyrrole), poly(3-n-propylpyrrole), poly(3-butylpyrrole), poly(3-octylpyrrole), poly(3-decylpyrrole), poly(3-dodecylpyrrole), poly(3,4-dimethylpyrrole), poly(3,4-dibutylpyrrole), poly(3-carboxypyrrole), poly(3-methyl-4-carboxypyrrole), poly(3-methyl-4-carboxyethylpyrrole), poly(3-methyl-4-carboxybutylpyrrole), poly(3-hydroxypyrrole), poly(3-methoxypyrrole), poly(3-ethoxypyrrole), poly(3-butoxypyrrole), poly(3-hexyloxypyrrole), poly(3-methyl-4-hexyloxypyrrole), polythiophene, poly(3-methylthiophene), poly(3-ethylthiophene), poly(3-propylthiophene), poly(3-butylthiophene), poly(3-hexylthiophene), poly(3-heptylthiophene), poly(3-octylthiophene), poly(3-decylthiophene), poly(3-dodecylthiophene), poly(3-octadecylthiophene), poly(3-bromothiophene), poly(3-chlorothiophene), poly(3-iodothiophene), poly(3-cyanothiophene), poly(3-phenylthiophene), poly(3,4-dimethylthiophene), poly(3,4-dibutylthiophene), poly(3-hydroxythiophene), poly(3-methoxythiophene), poly(3-ethoxythiophene), poly(3-butoxythiophene), poly(3-hexyloxythiophene), poly(3-heptyloxythiophene), poly(3-octyloxythiophene), poly(3-decyloxythiophene), poly(3-dodecyloxythiophene), poly(3-octadecyloxythiophene), poly(3,4-dihydroxythiophene), poly(3,4-dimethoxythiophene), poly(3,4-diethoxythiophene), poly(3,4-dipropoxythiophene), poly(3,4-dibutoxythiophene), poly(3,4-dihexyloxythiophene), poly(3,4-diheptyloxythiophene), poly-(3,4-dioctyloxythiophene), poly(3,4-didecyloxythiophene), poly(3,4-didodecyloxythiophene), poly(3,4-ethylenedioxythiophene), poly(3,4-propylenedioxythiophene), poly(3,4-butenedioxythiophene), poly(3-methyl-4-methoxythiophene), poly(3-methyl-4-ethoxythiophene), poly(3-carboxythiophene), poly(3-methyl-4-carboxythiophene), poly(3-methyl-4-carboxyethylthiophene), poly(3-methyl-4-carboxybutylthiophene), polyaniline, poly(2-methylaniline), poly(3-isobutylaniline), poly(2-anilinesulfonic acid), and poly(3-anilinesulfonic acid).

Among the examples of the π-conjugated conductive polymer, one or a copolymer of two or more selected from polypyrrole, polythiophene, poly(N-methylpyrrole), poly(3-methoxythiophene) and poly(3,4-ethylenedioxythiophene) can be particularly suitably used in view of resistivity or reactivity. Furthermore, polypyrrole or poly(3,4-ethylenedioxythiophene) can be suitably used from the viewpoints of a high conductivity and a high heat resistance. Moreover, an alkylsubstituted compound such as poly(N-methylpyrrole) or poly(3-methylthiophene) can be more suitably used in order to enhance the solubility in the solvent mainly containing an organic solvent, and compatibility and dispersibility in the case of adding a hydrophobic resin. Among alkyl groups, a methyl group is more preferable because of less adversely affecting conductivity.

### (b) Polyanion

As the polyanion, any anionic compound can be used without any particular limitation. The anionic compound is a compound having in its molecule an anion group with which the π-conjugated conductive polymer (a) can be doped by chemical oxidation. As the anion group, a sulfate group, a phosphate group, a phosphoric acid group, a carboxyl group, a sulfone group, or the like is preferable from the viewpoints of ease of production and a high stability. Among these anion groups, a sulfone group, a sulfate group, or a carboxyl group is more preferable because of being in excellent in the effect of doping the π-conjugated conductive polymer (a).

Examples of the polyanion can include a polymer obtained by polymerization of an anion group-containing polymerizable monomer, in addition to a polymer having an anion group introduced thereto by sulfonating an anion group-free polymer by a sulfonating agent. The polyanion is usually preferably obtained by polymerization of an anion group-containing polymerizable monomer from the viewpoint of ease of production. Examples of the method for producing such a polyanion can include a method in which the polyanion is obtained by oxidative polymerization or radical polymerization of an anion group-containing polymerizable monomer in a solvent in the presence of an oxidant and/or a polymerization catalyst. More specifically, a predetermined amount of an anion group-containing polymerizable monomer is dissolved in a solvent, the solution is kept at a certain temperature, and a solution in which a predetermined amount of an oxidant and/or a polymerization catalyst is dissolved in a solvent in advance is added thereto and reacted for a predetermined time. The polymer obtained by the reaction is adjusted so as to have a certain concentration by a catalyst. The production method can also allow the anion group-containing polymerizable monomer to be copolymerized with an anion group-free polymerizable monomer. The oxidant and/or the oxidation catalyst, and the solvent for use in polymerization of the anion group-containing polymerizable monomer are the same as those for use in polymerization of the precursor monomer for forming the π-conjugated conductive polymer (a).

The anion group-containing polymerizable monomer is a monomer having in its molecular a functional group that can be polymerized with the anion group, and specific examples thereof include vinylsulfonic acid and salts thereof, allylsulfonic acid and salts thereof, methallylsulfonic acid and salts thereof, styrenesulfonic acid and salts thereof, methallyloxybenzenesulfonic acid and salts thereof, allyloxybenzenesulfonic acid and salts thereof, α-methylstyrenesulfonic acid and salts thereof, acrylamido-t-butylsulfonic acid and salts thereof, 2-acrylamido-2-methylpropanesulfonic acid and salts thereof, cyclobutene-3-sulfonic acid and salts thereof, isoprenesulfonic acid and salts thereof, 1,3-butadiene-1-sulfonic acid and salts thereof, 1-methyl-1,3-butadiene-2-sulfonic acid and salts thereof, 1-methyl-1,3-butadiene-4-sulfonic acid and salts thereof, acrylic acid ethylsulfonic acid (CH₂CH-COO-(CH₂)₂-SO₃H) and salts thereof, acrylic acid propylsulfonic acid (CH₂CH-COO-(CH₂)₃-SO₃H) and salts thereof, acrylic acid-t-butylsulfonic acid (CH₂CH-COO-C(CH₃)₂CH₂-SO₃H) and salts thereof, acrylic acid-n-butylsulfonic acid (CH₂CH-COO-(CH₂)₄-SO₃H) and salts thereof, allylic acid ethylsulfonic acid (CH₂CHCH₂-COO-(CH₂)₂-SO₃H) and salts thereof, allylic acid-t-butylsulfonic acid (CH₂CHCH₂-COO-C(CH₃)₂CH₂-SO₃H) and salts thereof, 4-pentenoic acid ethylsulfonic acid (CH₂CH(CH₂)₂-COO-(CH₂)₂-SO₃H) and salts thereof, 4-pentenoic acid propylsulfonic acid (CH₂CH(CH₂)₂-COO-(CH₂)₃-SO₃H) and salts thereof, 4-pentenoic acid-n-butylsulfonic acid (CH₂CH(CH₂)₂-COO-(CH₂)₄-SO₃H) and salts thereof, 4-pentenoic acid-t-butylsulfonic acid (CH₂CH(CH₂)₂-COO-C(CH₃)₂CH₂-SO₃H) and salts thereof, 4-pentenoic acid phenylenesulfonic acid (CH₂CH(CH₂)₂COO-C₆H₄-SO₃H) and salts thereof, 4-pentenoic acid naphthalenesulfonic acid (CH₂CH(CH₂)₂-COO-C₁₀H₈-SO₃H) and salts thereof, methacrylic acid ethylsulfonic acid (CH₂C(CH₃)-COO-(CH₂)₂-SO₃H) and salts thereof, methacrylic acid propylsulfonic acid (CH₂C(CH₃)-COO-(CH₂)₃-SO₃H) and salts thereof, methacrylic acid t-butylsulfonic acid (CH₂C(CH₃)-COO-C(CH₃)₂CH₂-SO₃H) and salts thereof, methacrylic acid-n-butylsulfonic acid (CH₂C(CH₃)-COO-(CH₂)₄-SO₃H) and salts thereof, methacrylic acid phenylenesulfonic acid (CH₂C(CH₃)-COO-C₆H₄-SO₃H) and salts thereof, and methacrylic acid naphthalenesulfonic acid (CH₂C(CH₃)-COO-C₁₀H₈-SO₃H) and salts thereof. The anion group-containing polymerizable monomer may be a copolymer including two or more thereof.

Examples of the anion group-free polymerizable monomer include ethylene, propene, 1-butene, 2-butene, 1-pentene, 2-pentene, 1-hexene, 2-hexene, styrene, p-methylstyrene, p-ethylstyrene, p-butylstyrene, 2,4,6-trimethylstyrene, p-methoxystyrene, α-methylstyrene, 2-vinylnaphthalene, 6-methyl-2-vinylnaphthalene, 1-vinylimidazole, vinylpyridine, vinyl acetate, acrylaldehyde, acrylonitrile, N-vinyl-2-pyrrolidone, N-vinylacetamide, N-vinylformamide, N-vinylimidazole, acrylamide, N,N-dimethylacrylamide, acrylic acid, methyl acrylate, ethyl acrylate, propyl acrylate, n-butyl acrylate, isobutyl acrylate, t-butyl acrylate, isooctyl acrylate, isononylbutyl acrylate, lauryl acrylate, allyl acrylate, stearyl acrylate, isobonyl acrylate, cyclohexyl acrylate, benzyl acrylate, ethylcarbitol acrylate, phenoxyethyl acrylate, hydroxyethyl acrylate, methoxyethyl acrylate, ethoxyethyl acrylate, methoxybutyl acrylate, methacrylic acid, methyl methacrylate, ethyl methacrylate, n-butyl methacrylate, isobutyl methacrylate, t-butyl methacrylate, 2-ethylhexyl methacrylate, lauryl methacrylate, tridecyl methacrylate, stearyl methacrylate, cyclohexyl methacrylate, benzyl methacrylate, 2-hydroxyethyl methacrylate, 2-hydroxypropyl methacrylate, acryloylmorpholine, vinylamine, N,N-dimethylvinylamine, N,N-diethylvinylamine, N,N-dibutylvinylamine, N,N-di-t-butylvinylamine, N,N-diphenylvinylamine, N-vinylcarbazole, vinyl alcohol, vinyl chloride, vinyl fluoride, methyl vinyl ether, ethyl vinyl ether, cyclopropene, cyclobutene, cyclopentene, cyclohexene, cycloheptene, cyclooctene, 2-methylcyclohexene, vinylphenol, 1,3-butadiene, 1-methyl-1,3-butadiene, 2-methyl-1,3-butadiene, 1,4-dimethyl-1,3-butadiene, 1,2-dimethyl-1,3-butadiene, 1,3-dimethyl-1,3-butadiene, 1-octyl-1,3-butadiene, 2-octyl-1,3-butadiene, 1-phenyl-1,3-butadiene, 2-phenyl-1,3-butadiene, 1-hydroxy-1,3-butadiene, and 2-hydroxy-1,3-butadiene.

The degree of polymerization of the polyanion thus obtained is not particularly limited, and the number of monomer units is usually about 10 to 100,000, more preferably about 50 to 10,000, from the viewpoint of improving solubilization in a solvent, dispersibility and conductivity.

Specific examples of the polyanion can suitably include polyvinylsulfonic acid, polystyrenesulfonic acid, polyisoprenesulfonic acid, polyacrylic acid ethylsulfonic acid, polyacrylic acid butylsulfonic acid, and poly(2-acrylamido-2-methyl-1-propanesulfonic acid).

When the resulting anionic compound is an anion salt, the anion salt is preferably modified to an anionic acid. The method for modifying the anion salt to an anionic acid can include an ion-exchange method using an ion-exchange resin, a dialysis method, and an ultrafiltration method. Among these methods, an ultrafiltration method is preferable in terms of ease of operation. When a reduction in metal ion concentration is required, an ion-exchange method is used.

As a combination of the π-conjugated conductive polymer (a) and the polyanion (b), one selected from the respective groups of (a) and (b) can be used, and a combination of poly(3,4-ethylenedioxythiophene) as one example of the π-conjugated conductive polymer (a) and polystyrenesulfonic acid as one example of the polyanion (b) is preferable in terms of chemical stability, conductivity, preservation stability, and availability. Poly(3,4-ethylenedioxythiophene) and polystyrenesulfonic acid may also be each synthesized by subjecting an aqueous solution or a water dispersion liquid, in which a monomer for the conductive polymer and a dopant coexist, to polymerization in the presence of an oxidant, as described above. A commercially available conductive polymer/dopant water dispersion may also be used.

The content of the polyanion is preferably in the range from 0.1 to 10 mol; more preferably 1 to 7 mol based on 1 mol of the π-conjugated conductive polymer. When the content of the polyanion is 0.1 mol or more, the effect of doping the π-conjugated conductive polymer can be increased to result in an increase in conductivity. Additionally, solubility in a solvent is increased to allow a solution of the conductive polymer uniformly dispersed to be easily obtained. On the other hand, when the content of the polyanion is 10 mol or less, the content of the π-conjugated conductive polymer can be relatively increased to allow a higher conductivity to be exhibited.

### (c) Reaction product of anion other than anion required for doping in polyanion with oxirane group and/or oxetane group-containing organic compound

The reaction product of an anion other than the anion required for doping in the polyanion with an oxirane group and/or oxetane group-containing organic compound is obtained by adding the oxirane group and/or oxetane group-containing organic compound to the π-conjugated conductive polymer (a) and the polyanion (b).

The oxirane group and/or oxetane group-containing organic compound is not particularly limited as long as it can be coordinated or bound to an anion group or an electron attracting group in the polyanion. A compound containing one or less oxirane group or oxetane group in one molecule is more preferable from the viewpoint that aggregation or gelation can be decreased. The molecular weight of the oxirane group and/or oxetane group-containing organic compound preferably ranges from 50 to 2,000 in terms of ease of dissolution in an organic solvent.

The amount of the oxirane group and/or oxetane group-containing organic compound is preferably 0.1 to 50, more preferably 1.0 to 30.0 in a weight ratio relative to the anion group or the electron attracting group in the polyanion of the π-conjugated conductive polymer. When the amount of the oxirane group and/or oxetane group-containing organic compound is 0.1 or more in the weight ratio, the oxirane group and/or oxetane group-containing organic compound can be modified so that the anion group in the polyanion is dissolved in a solvent. On the other hand, when the amount of the oxirane group and/or oxetane group-containing organic compound is 50 or less in the weight ratio, an excess of the oxirane group and/or oxetane group-containing organic compound is hardly precipitated in a conductive polymer solution, and therefore the conductivity and mechanical properties of the resulting conductive coating film are easily prevented from being reduced.

The oxirane group and/or oxetane group-containing organic compound may be a compound having any molecular structure as long as such a compound has an oxirane group or oxetane group in its molecule. The oxirane group and/or oxetane group-containing organic compound, however, is effectively a compound having many carbon atoms in order that the compound is solubilized in a low-polarity organic solvent. In particular, the oxirane group and/or oxetane group-containing organic compound is preferably a compound having 10 or more carbon atoms in order that the compound is solubilized in a low-polarity organic solvent. When a large amount of water is used in a production process, it is preferable not to use an alkoxysilyl group-containing compound having a functional group that is hydrolyzed or reacts with water, as much as possible. On the other hand, when the production process undergoes freeze-drying, an alkoxysilyl group-containing compound may also be used because of being dispersed and solubilized in a solvent with characteristics thereof being maintained.

Hereinafter, the oxirane group and/or oxetane group-containing organic compound is exemplified.

### (Oxirane group-containing compound)

Examples of a monofunctional oxirane group-containing compound can include propylene oxide, 2,3-butylene oxide, isobutylene oxide, 1,2-butylene oxide, 1,2-epoxyhexane, 1,2-epoxyheptane, 1,2-epoxypentane, 1,2-epoxyoctane, 1,2-epoxydecane, 1,3-butadiene monoxide, 1,2-epoxytetradecane, glycidyl methyl ether, 1,2-epoxyoctadecane, 1,2-epoxyhexadecane, ethyl glycidyl ether, glycidyl isopropyl ether, tert-butyl glycidyl ether, 1,2-epoxyeicosane, 2-(chloromethyl)-1,2-epoxypropane, glycidol, epichlorohydrin, epibromohydrin, butyl glycidyl ether, 1,2-epoxyhexane, 1,2-epoxy-9-decane, 2-(chloromethyl)-1,2-epoxybutane, 2-ethylhexyl glycidyl ether, 1,2-epoxy-1H,1H,2H,2H,3H,3H-trifluorobutane, allyl glycidyl ether, tetracyanoethylene oxide, glycidyl butyrate, 1,2-epoxycyclooctane, glycidyl methacrylate, 1,2-epoxycyclododecane, 1-methyl-1,2-epoxycyclohexane, 1,2-epoxycyclopentadecane, 1,2-epoxycyclopentane, 1,2-epoxycyclohexane, 1,2-epoxy-1H,1H,2H,2H,3H,3H-heptadecafluorobutane, 3,4-epoxytetrahydrofuran, glycidyl stearate, 3-glycidyl oxypropyl trimethoxysilane, epoxysuccinic acid, glycidyl phenyl ether, isophorone oxide, α-pinene oxide, 2,3-epoxynorbornene, benzyl glycidyl ether, diethoxy(3-glycidyl oxypropyl)methylsilane, 3-[2-(perfluorohexyl)ethoxy]-1,2-epoxypropane, 1,1,1,3,5,5,5-heptamethyl-3-(3-glycidyl oxypropyl)trisiloxane, 9,10-epoxy-1,5-cyclododecadiene, glycidyl 4-tert-butylbenzoate, 2,2-bis(4-glycidyloxyphenyl)propane, 2-tert-butyl-2-[2-(4-chlorophenyl)]ethyloxirane, styrene oxide, glycidyl trityl ether, 2-(3,4-epoxycyclohexyl)ethyltrimethoxysilane, 2-phenylpropylene oxide, cholesterol-5α,6α-epoxide, stilbene oxide, glycidyl p-toluenesulfonate, ethyl 3-methyl-3-phenylglycidate, N-propyl-N-(2,3-epoxypropyl)perfluoro-n-octylsulfonamide, (2S,3S)-1,2-epoxy-3-(tert-butoxycarbonylamino)-4-phenylbutane, (R)-glycidyl 3-nitrobenzenesulfonate, glycidyl 3-nitrobenzenesulfonate, parthenolide, N-glycidyl phthalimide, endrin, dieldrin, 4-glycidyloxy carbazole, and oxiranylmethyl 7,7-dimethyloctanoate.

Examples of a polyfunctional oxirane group-containing compound can include 1,7-octadiene diepoxide, neopentyl glycol diglycidyl ether, 4-butanediol diglycidyl ether, 1,2:3,4-diepoxybutane, diglycidyl 1,2-cyclohexanedicarboxylate, triglycidyl isocyanurate neopentyl glycol diglycidyl ether, 1,2:3,4-diepoxybutane, polyethylene glycol #200 diglycidyl ether, ethylene glycol diglycidyl ether, diethylene glycol diglycidyl ether, propylene glycol diglycidyl ether, tripropylene glycol diglycidyl ether, polypropylene glycol diglycidyl ether, neopentyl glycol diglycidyl ether, 1,6-hexanediol diglycidyl ether, glycerin diglycidyl ether, trimethylol propane triglycidyl ether, and hydrogenerated bisphenol A diglycidyl ether.

### (Oxetane group-containing compound)

Examples of a monofunctional oxetane group-containing compound can include 3-ethyl-3-hydroxymethyloxetane (= oxetane alcohol), 2-ethylhexyloxetane, (3-ethyl-3-oxetanyl)methyl acrylate, and (3-ethyl-3-oxetanyl)methacrylate.

Examples of a polyfunctional oxetane group-containing compound can include xylylene bisoxetane, 3-ethyl-3{[(3-ethyloxetane-3-yl)methoxy]methyl}oxetane, 1,4-benzenedicarboxylic acid, and bis{[3-ethyl-3-oxetanyl]methyl}ester.

In the above conductive polymer composition, the oxirane group or oxetane group reacts with the anion group of the polyanion, and therefore the polyanion loses hydrophilicity and exhibits lipophilicity. Accordingly, this conductive polymer composition is solubilized or can be dispersed in an organic solvent at a high concentration.

Examples of an organic solvent for use in the solvent for solubilizing or dispersing the conductive polymer composition can suitably include polar solvents typified by N-methyl-2-pyrrolidone, N,N-dimethylformamide, N,N-dimethylacetamide, dimethylsulfoxide, hexamethylene phosphonium triamide, acetonitrile and benzonitrile; phenols typified by cresol, phenol and xylenol; alcohols typified by methanol, ethanol, propanol and butanol; ketones typified by acetone, methyl ethyl ketone and methyl isobutyl ketone; esters typified by ethyl acetate, propyl acetate and butyl acetate; hydrocarbons such as hexane, heptane, benzene, toluene and xylene; carboxylic acids typified by formic acid and acetic acid; carbonate compounds typified by ethylene carbonate and propylene carbonate; ether compounds typified by dioxane and diethyl ether; linear ethers typified by ethylene glycol dialkyl ether, propylene glycol dialkyl ether, polyethylene glycol dialkyl ether and polypropylene glycol dialkyl ether; heterocyclic compounds typified by 3-methyl-2-oxazolidinone; and nitrile compounds typified by acetonitrile, glutarodinitrile, methoxyacetonitrile, propionitrile and benzonitrile. These organic solvents may be used singly or as a mixture of two or more. Among these organic solvents, alcohols, ketones, ethers, esters, and hydrocarbons can be more suitably used in terms of ease of mixing with various organics.

### (d) Others

Examples of an additive to the solvent in which the conductive polymer composition is solubilized or dispersed can include an additive for an enhancement in conductivity.

### (Conductivity enhancer)

Examples of a conductivity enhancer include a glycidyl compound, a polar solvent, a polyhydric aliphatic alcohol, a nitrogen-containing aromatic cyclic compound, a compound having two or more hydroxy groups, a compound having two or more carboxy groups, a compound having one or more hydroxy groups and one or more carboxy groups, and a lactam compound. Among them, a conductivity enhancer that hardly inhibits curing of a peeling component is preferable. When the conductivity enhancer hardly inhibits curing of a peeling component, a peeling agent can be prevented from being transferred on a pressure-sensitive adhesive layer of a pressure-sensitive adhesive sheet, after the pressure-sensitive adhesive layer is stacked on a peeling agent layer obtained from the antistatic peeling agent. The conductivity enhancer that hardly inhibits curing of a peeling component includes a glycidyl compound, a polar solvent, and a polyhydric aliphatic alcohol. In addition, the conductivity enhancer is preferably liquid at 25°C. When the conductivity enhancer is liquid, the transparency of the peeling agent layer formed from the antistatic peeling agent can be enhanced, and foreign materials on the pressure-sensitive adhesive layer bonded to the peeling agent layer can be prevented from being transferred.

Specific examples of the glycidyl compound include ethyl glycidyl ether, n-butyl glycidyl ether, t-butyl glycidyl ether, allyl glycidyl ether, benzylglycidyl ether, glycidyl phenyl ether, bisphenol A diglycidyl ether, glycidyl ether acrylate, and glycidyl ether methacrylate. Specific examples of the polar solvent include N-methylformamide, N-methylacrylamide, N-methylmethacrylamide, N-ethylacrylamide, N-ethylmethacrylamide, N,N-dimethylacrylamide, N,N-dimethylmethacrylamide, N,N-diethylacrylamide, N,N-diethylmethacrylamide, 2-hydroxyethylacrylamide, 2-hydroxyethylmethacrylamide, N-methylolacrylamide, N-methylolmethacrylamide, N-methyl-2-pyrrolidone, N-methylacetamide, N,N-dimethylformamide, N,N-dimethylacetamide, dimethylsulfoxide, hexamethylenephosphortriamide, N-vinylpyrrolidone, N-vinylformamide, N-vinylacetamide, methyl lactate, ethyl lactate, and propyl lactate. The polyhydric aliphatic alcohol includes ethylene glycol, diethylene glycol, propylene glycol, 1,3-butylene glycol, 1,4-butylene glycol, glycerin, diglycerin, isoprene glycol, butanediol, 1,5-pentanediol, 1,6-hexanediol, 1,9-nonanediol, neopentyl glycol, trimethylolethane, trimethylol propane, thiodiethanol, and dipropylene glycol.

The content of the conductivity enhancer is preferably 10 to 10000 parts by mass, more preferably 30 to 5000 parts by mass based on 100 parts by mass of the conductive component. When the content of the conductivity enhancer is the lower limit or more, antistatic properties can be further enhanced. On the other hand, when the content is the upper limit or less, peeling properties can be further enhanced.

### 2. Curable organopolysiloxane composition

The conductive polymer composition is mixed with a curable organopolysiloxane composition in order to provide silicone having antistatic performances. For the curable organopolysiloxane composition for use in this embodiment, the following compositions exemplified can be used.

### 2.1 Addition curing type organopolysiloxane composition

An addition curing type organopolysiloxane composition mainly includes the following compounds.
a) Organopolysiloxane having at least two alkenyl groups in its molecule
b) Organopolysiloxane having at least three hydrosilyl groups in its molecule
c) Hydrosilylation catalyst mainly made of a modified product or a complex of a platinum group.metal such as platinum, palladium or rhodium

### 2.2 Condensation curing type organopolysiloxane composition

A condensation curing type organopolysiloxane composition mainly includes the following compounds described in any of Example 1 to Example 3.

### <Example 1>

a) Organopolysiloxane having at least two silanol groups in its molecule
b) Organosilane or organopolysiloxane having at least three hydrolyzable groups in its molecule
c) Condensation catalyst

### <Example 2>

a) Organopolysiloxane having at least two silanol groups in its molecule
b) Organopolysiloxane having at least three hydrosilyl groups in its molecule
c) Condensation catalyst

### <Example 3>

a) Organopolysiloxane having at least three hydrolyzable groups in its molecule
b) Condensation catalyst

### 2.3 Ionizing radiation curing type organopolysiloxane composition

An ionizing radiation curing type organopolysiloxane composition includes the following compound(s) described in any of Example 1 to Example 6, and is cured using a photoinitiator by ultraviolet light or is cured by electron beam.

### <Example 1>

### Acrylamide group-containing organopolysiloxane

This organopolysiloxane is an organopolysiloxane having, in its molecule, an acrylamide functional group represented by the following general formula (i).

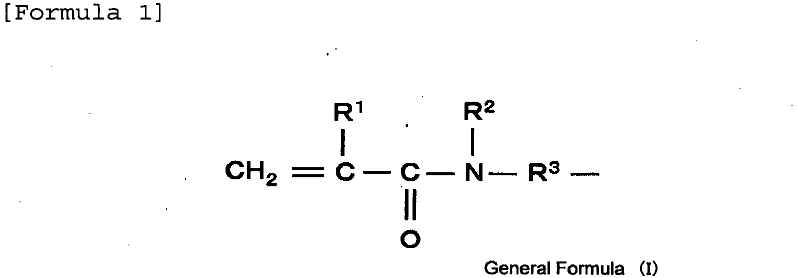

In the general formula (i), R¹ represents a hydrogen atom or a methyl group, R² represents a hydrogen atom or an alkyl group having 1 to 4 carbon atoms, and R³ represents a divalent hydrocarbon group.

### <Example 2>

### Organopolysiloxane having at least two mercaptoalkyl groups in one molecule

This organopolysiloxane is an organopolysiloxane, in one molecule, at least two mercaptoalkyl functional groups represented by the following general formula (ii).

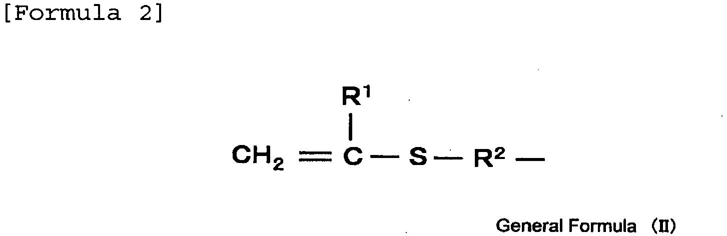

In the general formula (ii), R¹ represents a hydrogen atom or a methyl group, and R² represents a divalent hydrocarbon group.

### <Example 3>

### Composition including organopolysiloxane having at least two alkenyl groups in one molecule

This organopolysiloxane is a composition including an organopolysiloxane containing at least two alkenyl groups (-CₙH₂ₙ₋₁ (n is a number of 2 or more.)) in one molecule.

### <Example 4>

### Alkenyl group-containing organopolysiloxane

This organopolysiloxane is an organopolysiloxane containing an alkenyl group (-CₙH₂ₙ₋₁ (n is a number of 2 or more.)) in its molecule.

### <Example 5>

### Acrylic group or methacrylic group-containing organopolysiloxane

This organopolysiloxane is an organopolysiloxane containing an acrylic group (CH₂CHCO-) or a methacrylic group (CH₂C(CH₃)CO-) in its molecule.

### <Example 6>

a) Organopolysiloxane having at least two alkenyl groups in one molecule
b) Organopolysiloxane having at least two silicon atom-binding hydrogen atoms in one molecule

When such a curable organopolysiloxane composition is a liquid composition, a conductive polymer composition, in which a silicone composition is solubilized and dispersed in the solvent mainly containing an organic solvent, can be mixed as it is, and used. The conductive polymer composition may also be diluted with a solvent, and used. An antistatic silicone film preferably has a thickness of 100 nm to 1 µm in terms of performances and costs. Accordingly, such a curable organopolysiloxane composition is usually diluted with a solvent, and used.

### <B Embodiment of antistatic silicone film>

An antistatic silicone film of an embodiment of the present invention is a film obtained by supplying the curable antistatic organopolysiloxane composition onto a substrate and curing the composition. When the curable antistatic organopolysiloxane composition is solid, a coating material is prepared from a solution in which the composition is solubilized or dispersed in the solvent mainly containing an organic solvent. When the curable antistatic organopolysiloxane composition is a solution in which the composition is solubilized or dispersed in the solvent mainly containing an organic solvent, a coating material is prepared from the composition itself or the composition further diluted with an organic solvent. The coating material is supplied onto a substrate typified by paper, plastics, iron, ceramics, or glass. Examples of the supplying method can include various methods such as a coating method using a brush or a bar coater, a dipping method of dipping the substrate in the coating material, and a spin-coating method of dropping and extending the coating material on the substrate by rotation of the substrate. Examples of the method of curing the coating material on the substrate can include a method of removing the organic solvent by heating and a method of irradiating the coating material with light such as ultraviolet light, or electron beam to cure the coating material.

As described above, the conductive polymer composition forming the curable antistatic organopolysiloxane composition of the embodiment includes the reaction product of an anion other than the anion required for doping in the polyanion with the oxirane group and/or oxetane group-containing organic compound, and therefore is dispersible and soluble in various solvents mainly containing an organic solvent. The conductive polymer composition is also soluble in various organic resins or organic resin composition solutions. The conductive polymer composition is excellent in preservation stability and electrical resistivity stability, and can also be applied in the field where amine or the like is an obstacle, as compared with a composition obtained by a conventionally known method in which solvent substitution is conducted by a reaction with a polyanion residue in a conductive polymer water dispersion liquid using an amine type compound and a phase-transfer catalyst. Such a conductive polymer composition can be mixed with the curable organopolysiloxane composition to thereby provide a curable antistatic organopolysiloxane composition that is stably dispersed and/or solubilized in the solvent mainly containing an organic solvent. The curable antistatic organopolysiloxane composition can be supplied onto a substrate as a coating material and cured to thereby form a silicone film that is hardly peeled, and that is excellent in transparency and also is excellent in antistatic properties.

### Examples

Next, Production Examples and Examples of the present invention are described. The present invention, however, is not limited to the following Examples.

### <Production Examples>

### (Production Example 1) ··· Production of polystyrenesulfonic acid

In 1000 ml of ion-exchange water was dissolved 206 g of sodium styrene sulfonate, 1.14 g of an ammonium persulfate oxidant solution dissolved in 10 ml of water in advance was dropped thereto for 20 minutes with stirring at 80°C, and the solution was stirred for 12 hours. To the resulting sodium styrene sulfonate-containing solution was added 1000 ml of sulfuric acid diluted to 10% by mass, 1000 ml of a polystyrenesulfonic acid-containing solution was removed using an ultrafiltration method, 2000 ml of ion-exchange water was added to the residual liquid, and about 2000 ml of the solution was removed using an ultrafiltration method. The above ultrafiltration operation was repeated three times. Furthermore, about 2000 ml of ion-exchange water was added to the resulting filtrate, and about 2000 ml of the solution was removed using an ultrafiltration method. This ultrafiltration operation was repeated three times. Water in the resulting solution was removed under reduced pressure to provide a colorless solid. The weight average molecular weight of the resulting polystyrenesulfonic acid was measured with Pullulan produced by Showa Denko K.K. as a standard substance by using a HPLC (high-performance liquid chromatography) system in which a GPC (gel filtration chromatography) column was used, and as a result, was 300000.

### (Production Example 2) ··· Production of aqueous PEDOT-PSS solution

3,4-Ethylenedioxythiophene (14.2 g), and a solution, in which 36.7 g of the polystyrenesulfonic acid obtained in Production Example 1 was dissolved in 2000 ml of ion-exchange water, were mixed at 20°C. While the mixed solution thus obtained was stirred with being kept at 20°C, 29.64 g of ammonium persulfate dissolved in 200 ml of ion-exchange water and 8.0 g of a ferric sulfate oxidation catalyst solution were slowly added and stirred for 3 hours for reaction. To the obtained reaction liquid was added 2000 ml of ion-exchange water, and about 2000 ml of the solution was removed using an ultrafiltration method. This operation was repeated three times. Next, 200 ml of sulfuric acid diluted to 10% by mass and 2000 ml of ion-exchange water were added

to the resulting solution, about 2000 ml of the solution was removed using an ultrafiltration method, 2000 ml of ion-exchange water was added thereto, and about 2000 ml of the solution was removed using an ultrafiltration method. This operation was repeated three times. Furthermore, 2000 ml of ion-exchange water was added to the resulting solution, and about 2000 ml of the solution was removed using an ultrafiltration method. This operation was repeated five times to provide a blue aqueous solution of about 1.2% by mass of PEDOT-PSS.

### (Production Example 3) ··· Production of organic solvent with PEDOT-PSS dispersed therein

Methanol (150 g) and 7.06 g of mixed C10/C12 higher alcohol glycidyl ether (produced by Kyoeisha Chemical Co., Ltd., Epolite M-1230) were mixed. Next, 50 g of the aqueous PEDOT-PSS solution obtained in Production Example 2 was mixed therewith and stirred at room temperature to provide a navy-blue precipitate. This precipitate was recovered by filtration and dispersed in methyl ethyl ketone to provide a dispersion liquid (concentration: about 0.5% by mass) of PEDOT-PSS dispersed in methyl ethyl ketone.

### (Production Example 4) ··· Production of organic solvent with PEDOT-PSS dispersed therein

A dispersion liquid (concentration: about 0.5% by mass) of PEDOT-PSS dispersed in methyl ethyl ketone was obtained under the same conditions as in Production Example 3 except that the amount of the mixed C10/C12 higher alcohol glycidyl ether in Production Example 3 was changed to 12.5 g.

### (Production Example 5) ··· Production of organic solvent with PEDOT-PSS dispersed therein

A dispersion liquid (concentration: about 0.5% by mass) of PEDOT-PSS dispersed in methyl ethyl ketone was obtained under the same conditions as in Production Example 3 except that the mixed C10/C12 higher alcohol glycidyl ether in Production Example 3 was changed to mixed C12/C13 higher alcohol glycidyl ether.

### (Production Example 6) ··· Production of organic solvent with PEDOT-PSS dispersed therein

A dispersion liquid (concentration: about 0.5% by mass) of PEDOT-PSS dispersed in methyl ethyl ketone was obtained under the same conditions as in Production Example 5 except that the amount of the mixed C12/C13 higher alcohol glycidyl ether in Production Example 5 was changed to 12.5 g.

### (Production Example 7) ··· Production of organic solvent with PEDOT-PSS dispersed therein

A dispersion liquid (concentration: about 0.5% by mass) of PEDOT-PSS dispersed in methyl ethyl ketone was obtained under the same conditions as in Production Example 3 except that the mixed C10/C12 higher alcohol glycidyl ether in Production Example 3 was changed to mixed C12/C14 higher alcohol glycidyl ether.

### (Production Example 8) ··· Production of organic solvent with PEDOT-PSS dispersed therein

A dispersion liquid (concentration: about 0.5% by mass) of PEDOT-PSS dispersed in methyl ethyl ketone was obtained under the same conditions as in Production Example 7 except that the amount of the mixed C12/C14 higher alcohol glycidyl ether in Production Example 7 was changed to 12.5 g.

### (Production Example 9) ··· Production of organic solvent with PEDOT-PSS dispersed therein

To 100 g of the aqueous PEDOT-PSS solution obtained in Production Example 2 was added 2 g of allyl glycidyl ether, and stirred at room temperature for 4 hours. Next, 200 g of methanol was added thereto and warmed to 50°C, and a solution, in which 5 g of mixed C12/C13 higher alcohol glycidyl ether was mixed with 100 g of methanol in advance, was dropped for 4 hours to provide a navy-blue precipitate. This precipitate was recovered by filtration and dispersed in methyl ethyl ketone to provide a solution of about 1% by mass of PEDOT-PSS dispersed in methyl ethyl ketone.

### (Production Example 10) ··· Production of organic solvent with PEDOT-PSS dispersed therein

A solution of about 1% by mass of PEDOT-PSS dispersed in methyl ethyl ketone was obtained under the same conditions as in Production Example 9 except that allyl glycidyl ether in Production Example 9 was changed to 3-glycidyl oxypropyl trimethoxysilane.

### (Production Example 11) ··· Production of organic solvent with PEDOT-PSS dispersed therein

To 100 g of the aqueous PEDOT-PSS solution obtained in Production Example 2 was added 100 g of methanol and warmed to 50°C, and a solution in which 2 g of propylene oxide was mixed with 50 g of methanol in advance was dropped for 4 hours. Thereafter, a solution in which 5 g of mixed C12/C13 higher alcohol glycidyl ether was mixed with 50 g of methanol in advance was dropped for 4 hours to provide a navy-blue precipitate. This precipitate was recovered by filtration and dispersed in methyl ethyl ketone to provide a solution of about 1% by mass of PEDOT-PSS dispersed in methyl ethyl ketone.

### (Production Example 12)

Each solution of about 1% by mass of PEDOT-PSS dispersed in methyl ethyl ketone was obtained under the same conditions as in Production Example 9 except that propylene oxide in Production Example 11 was changed to each of materials in Table 1 and Table 2 below.

**[Table 1]**

| Example | Used materials |
|---|---|
| 13 | 2,3-Butylene oxide |
| 14 | Isobutylene oxide |
| 15 | 1,2-Butylene oxide |
| 16 | 1,2-Epoxyhexane |
| 17 | 1,2-Epoxyheptane |
| 18 | 1,2-Epoxypentane |
| 19 | 1,2-Epoxyoctane |
| 20 | 1,2-Epoxydecane |
| 21 | 1,3-Butadiene monoxide |
| 22 | 1,2-Epoxytetradecane |
| 23 | Glycidyl methyl ether |
| 24 | 1,2-Epoxyoctadecane |
| 25 | 1,2-Epoxyhexadecane |
| 26 | Ethyl glycidyl ether |
| 27 | Glycidylisoporopyl ether |
| 28 | tert-Butyl glycidyl ether |
| 29 | 1,2-Epoxyeicosane |
| 30 | 2-(Chloromethyl)-1,2-epoxypropane |
| 31 | Glycidol |
| 32 | Epichlorohydrin |
| 33 | Epibromohydrin |
| 34 | Butyl glycidyl ether |
| 35 | 1,2-Epoxy-9-decane |
| 36 | 2-(Chloromethyl)-1,2-epoxybutane |
| 37 | 2-Ethylhexyl glycidyl ether |
| 38 | 1,2-Epoxy-1H,1H,2H,2H,3H,3H-trifluorobutane |
| 39 | Tetracyanoethylene oxide |
| 40 | Glycidyl butyrate |
| 41 | 1,2-Epoxycyclooctane |
| 42 | Glycidyl methacryrate |
| 43 | 1,2-Epoxycyclododecane |
| 44 | 1-Methyl-1,2-epoxycyclohexane |
| 45 | 1,2-Epoxycyclopentadecane |
| 46 | 1,2-Epoxycyclopentane |
| 47 | 1.2-Epoxycyclohexane |
| 48 | 1,2-Epoxy-1H,1H,2H,2H,3H,3H-heptadecafluorobutane |
| 49 | 3,4-Epoxytetrahydrofuran |
| 50 | Glycidyl stearate |
| 51 | Epoxysuccinic acid |
| 52 | Glycidyl phenyl ether |
| 53 | Isophorone oxide |
| 54 | a-Pinene oxide |
| 55 | 2,3-Epoxynorbonene |
| 56 | Benzyl glycidyl ether |
| 57 | Diethoxy(3-glycidyloxypropyl)methylsilane |
| 58 | 3-[2-(Perfluorohexyl)ethoxy]-1,2-epoxypropane |
| 59 | 1,1,1,3,5,5,5-Heptamethyl-3-(3-glycidyloxypropyl)tricyclohexane |
| 60 | 9,10-Epoxy-1,5-cyclododecadiene |
| 61 | Glycidyl 4-tert-butylbenzoate |
| 62 | 2,2-Bis(4-glycidyloxyphenyl)propane |

**[Table 2]**

| Example | Used materials |
|---|---|
| 63 | 2-tert-Butyl-2-[2-(4-chlorophenyl)]ethyloxirane |
| 64 | Styrene oxide |
| 65 | Glycidyl trityl ether |
| 66 | 2-(3,4-Epoxycyclohexyl)ethyltrimethoxysilane |
| 67 | 2-Phenylpropylene oxide |
| 68 | Cholesterol-5a,6a-epoxide |
| 69 | Stilbene oxide |
| 70 | Glycidyl p-toluenesulfonate |
| 71 | Ethyl3-methyl-3-phenylglycidate |
| 72 | N-Propyl-N-(2,3-epoxypropyl)perfluoro-n-octylsulfonemide |
| 73 | (2S,3S)-1,2-Epoxy-3-(tert-butoxycarbonylamino)-4-phenylbutane |
| 74 | (R)-Glycidyl 3-nitrobenzenesulfonate |
| 75 | Glycidyl 3-nitrobenzenesulfonate |
| 76 | Parthenolide |
| 77 | N-Glycidyl phthalimide |
| 78 | Endrin |
| 79 | Dieldrin |
| 80 | 4-Glycidyloxy carbazole |
| 81 | Oxiranylmethyl 7,7-dimethyloctanoate |
| 82 | 1,7-Octadiene diepoxide |
| 83 | Neopentyl glycol diglycidyl ether |
| 84 | 4-Butanediol diglycidyl ether |
| 85 | 1,2:3,4-Diepoxybutane |
| 86 | Diglycidyl 1,2-cyclohexanedicarboxylete |
| 87 | Triglycidyl isocyanurate, Neopentyl glycol diglycidyl ether |
| 88 | 1,2:3,4-Diepoxybutane |
| 89 | Polyethylene glycol #200 diglycidyl ether |
| 90 | Ethylene glycol diglycidyl ether |
| 91 | Diethylene glycol diglycidyl ether |
| 92 | Propylene glycol diglycidyl ether |
| 93 | Tripropylene glycol diglycidyl ether |
| 94 | Polypropylene glycol diglycidyl ether |
| 95 | Neopentyl glycol diglycidyl ether |
| 96 | 1,6-Hexanediol diglycidyl ether |
| 97 | Glycerin diglycidyl ether |
| 98 | Trimethylol propane triglycidyl ether |
| 99 | Hydrogenerated bisphenol A diglycidyl ether |
| 100 | 3-Ethyl-3-hydroxymathyloxetane |
| 101 | 2-Ethylhexyloxetane |
| 102 | (3-Ethyl-3-oxetanyl)methyl acrylate |
| 103 | (3-Ethyl-3-oxetanyl)methacrylate |
| 104 | Xylylene bisoxetane |
| 105 | 3-Ethyl-3{[(3-ethyloxetane-3-yl)methoxy]methyl]oxetane |
| 106 | 1.4-Benzenedicarboxylic acid, bis{[3-ethyl-3-oxetanyl]methyl}ester |

### <Evaluation method of antistatic silicone film>

The force required for peeling (hereinafter, referred to as "peeling force" or "peeling strength".), the residual adhesiveness rate, and the surface resistivity were evaluated or measured by the following methods.

### (Peeling strength)

The resulting coating material (also referred to as peeling agent) was applied to a PET film having a thickness of 38 µm by a bar coater (No. 4), and heated in a hot air dryer at 120°C for 1 minute to form a peeling agent layer. Next, a polyester pressure-sensitive adhesive tape (product name: Nitto No. 31B, produced by Nitto Denko Corporation) of 2.5 cm × 15 cm was placed on the surface of the peeling agent layer, and was subjected to pressure-bonding on the pressure-sensitive adhesive tape using a 2-kg roller to bond the polyester pressure-sensitive adhesive tape to the peeling agent layer. Thereafter, the resultant was left to stand at room temperature for 20 hours or subjected to a heat treatment at 85°C for 20 hours to prepare a test piece. Then, the polyester pressure-sensitive adhesive tape was peeled from the peeling agent layer at an angle of 180 degrees (peeling rate: 0.3 m/min) using a tensile tester, and the peeling strength was measured. As the peeling strength is lower, the pressure-sensitive adhesive sheet can be more easily peeled (namely, lightly peeled) after the pressure-sensitive adhesive sheet is bonded to the peeling agent layer.

### (Residual adhesiveness rate)

As in the measurement of the peeling strength, the polyester pressure-sensitive adhesive tape was bonded to the peeling agent layer. The resultant was left to stand at room temperature for 20 hours or subjected to a heat treatment at 85°C for 20 hours, and thereafter the polyester pressure-sensitive adhesive tape was peeled from the peeling agent layer. Furthermore, the polyester pressure-sensitive adhesive tape was pressure-bonded to an untreated PET film (product name: Lumirror, produced by Toray Industries Inc.) using a 2-kg roller. Then, the polyester pressure-sensitive adhesive tape was peeled from the PET film (peeling rate: 0.3 m/min) in the same manner as in the peeling test using a tensile tester, and the peeling strength X was measured. In addition, the polyester pressure-sensitive adhesive tape not bonded to the peeling agent layer was pressure-bonded to an untreated PET film using a 2-kg roller, the polyester pressure-sensitive adhesive tape was peeled from the PET film using a tensile tester, and the peeling strength Y was measured. After the measurement, the residual adhesiveness rate was determined by the following expression: peeling strength X/peeling strength Y) × 100 (%). It is indicated that as the residual adhesiveness rate is higher, silicone of the peeling agent layer is less transferred to the pressure-sensitive adhesive tape, and a reduction in the adhesive force of the polyester pressure-sensitive adhesive tape due to bonding to the peeling agent layer is suppressed.

### (Surface resistivity)

The surface resistivity was measured at a voltage applied of 10 V by Probe MCP-HTP12 using Hiresta MCP-HT450 manufactured by Mitsubishi Chemical Corporation.

### <Production of antistatic silicone film>

### (Example 1)

To 60 g of the PEDOT-PSS solution obtained in Production Example 3 were added 10 g of KS-3703 (N.V 30% produced by Shin-Etsu Chemical Co., Ltd.) and 30 g of methyl ethyl ketone, and added 0.3 g of CAT-PL-50T (produced by Shin-Etsu Chemical Co., Ltd.), to produce a coating material. The coating material was applied onto a PET film using a #4 bar coater, and dried at 120°C for 1 minute to form a film. Properties of the film are shown in Table 3.

### (Example 2)

A film was formed under the same conditions as in Example 1 except that the PEDOT-PSS solution used in Example 1 was changed to that obtained in Production Example 4. Properties of the film are shown in Table 3.

### (Example 3).

A film was formed under the same conditions as in Example 1 except that the PEDOT-PSS solution used in Example 1 was changed to that obtained in Production Example 5. Properties of the film are shown in Table 3.

### (Example 4)

A film was formed under the same conditions as in Example 1 except that the PEDOT-PSS solution used in Example 1 was changed to that obtained in Production Example 6. Properties of the film are shown in Table 3.

### (Example 5)

A film was formed under the same conditions as in Example 1 except that the PEDOT-PSS solution used in Example 1 was changed to that obtained in Production Example 7. Properties of the film are shown in Table 3.

### (Example 6)

A film was formed under the same conditions as in Example 1 except that the PEDOT-PSS solution used in Example 1 was changed to that obtained in Production Example 8. Properties of the film are shown in Table 3.

### (Example 7)

To 60 g of the PEDOT-PSS solution obtained in Production Example 3 were added 10 g of KS-847H (N.V 30% produced by Shin-Etsu Chemical Co., Ltd.) and 30 g of methyl ethyl ketone, and added 0.2 g of CAT-PL-50T (produced by Shin-Etsu Chemical Co., Ltd.), to produce a coating material. The coating material was applied onto a PET film using a #4 bar coater, and dried at 120°C for 1 minute to form a film. Properties of the film are shown in Table 3.

### (Comparative Example 1)

A coating material was produced in the same manner as in Example 1 except that the PEDOT-PSS solution obtained in Production Example 3 was changed to the PEDOT-PSS solution obtained in Production Example 2, but PEDOT-PSS was aggregated or separated and could not be dispersed in silicone.

**[Table 3]**

| | Surface resistivity (Ω/□) | Room temp./after 20 hours | | 85 degrees C./after 20 hours | |
|---|---|---|---|---|---|
| | | Peeling force (N/25mm) | Residual adhesiveness rate (%) | Peeling force (N/25mm) | Residual adhesiveness rate (%) |
| Example 1 | 6×10⁸ | 0.25 | 97 | 1.37 | 79 |
| Example 2 | 9×10⁸ | 0.08 | 97 | 0.24 | 90 |
| Example 3 | 5×10⁸ | 0.09 | 100 | 0.26 | 91 |
| Example 4 | 4×10⁷ | 0.09 | 100 | 0.24 | 90 |
| Example 5 | 6×10⁸ | 0.09 | 97 | 0.24 | 90 |
| Example 6 | 4×10⁸ | 0.09 | 100 | 0.28 | 90 |
| Example 7 | 7×10⁸ | 0.07 | 99 | 0.16 | 94 |
| Comparative Example 1 | Not dispersed in silicone | | | | |

### (Example 8)

To 60 g of the PEDOT-PSS solution obtained in Production Example 3 were added 3 g of X-62-7205 (N.V 100% produced by Shin-Etsu Chemical Co., Ltd.), 30 g of methyl ethyl ketone and 7 g of diacetone alcohol, and added 0.15 g of Darocur 1173 (N.V 5% produced by Chiba Specialty Chemicals Co., Ltd.), to produce a coating material. The coating material was applied onto a PET film using a #4 bar coater, and irradiated by a mercury lamp at 800 mJ under a nitrogen atmosphere to form a film. Properties of the film are shown in Table 4.

### (Comparative Example 2)

A coating material was produced in the same manner as in Example 8 except that the PEDOT-PSS solution obtained in Production Example 3 was changed to the PEDOT-PSS solution obtained in Production Example 2, in Example 8, but PEDOT-PSS was aggregated or separated and could not be dispersed in silicone.

**[Table 4]**

| | Surface resistivity (Ω/□) | Room temp./after 20 hours | | 85 degrees C./after 20 hours | |
|---|---|---|---|---|---|
| | | Peeling force (N/25mm) | Residual adhesiveness rate (%) | Peeling force (N/25mm) | Residual adhesiveness rate (%) |
| Example 8 | 5×10⁸ | 0.07 | 99 | 0.16 | 94 |
| Comparative Example 2 | Not dispersed in silicone | | | | |

### (Example 9)

To 60 g of the PEDOT-PSS solution obtained in Production Example 3 were added 10 g of KS-723B (N.V 30% produced by Shin-Etsu Chemical Co., Ltd.) and 30 g of methyl ethyl ketone, and added 0.04 g of CAT-PS-8S (produced by Shin-Etsu Chemical Co., Ltd.), to produce a coating material. The coating material was applied onto a PET film using a #4 bar coater, and dried at 120°C for 1 minute to form a film. Properties of the film are shown in Table 5.

### (Comparative Example 3)

A coating material was produced in the same manner as in Example 9 except that the PEDOT-PSS solution obtained in Production Example 3 was changed to the PEDOT-PSS solution obtained in Production Example 2, in Example 9, but PEDOT-PSS was aggregated or separated and could not be dispersed in silicone.

**[Table 5]**

| | Surface resistivity (Ω/□) | Room temp./after 20 hours | | 85 degrees C./after 20 hours | |
|---|---|---|---|---|---|
| | | Peeling force (N/25mm) | Residual adhesiveness rate (%) | Peeling force (N/25mm) | Residual adhesiveness rate (%) |
| Example 9 | 5×10⁸ | 0.07 | 90 | 0.31 | 81 |
| Comparative Example 3 | Not dispersed in silicone | | | | |

### (Example 10)

To 60 g of the PEDOT-PSS solution obtained in Production Example 9 were added 10 g of KS-3703 (N.V 30% produced by Shin-Etsu Chemical Co., Ltd.) and 30 g of methyl ethyl ketone, and added 0.3 g of CAT-PL-50T (produced by Shin-Etsu Chemical Co., Ltd.), to produce a coating material. The coating material was applied onto a PET film using a #4 bar coater, and dried at 120°C for 1 minute to form a film. Properties of the film are shown in Table 6.

### (Example 11)

To 60 g of the PEDOT-PSS solution obtained in Production Example 10 were added 10 g of KS-3703 (N.V 30% produced by Shin-Etsu Chemical Co., Ltd.) and 30 g of methyl ethyl ketone, and added 0.3 g of CAT-PL-50T (produced by Shin-Etsu Chemical Co., Ltd.), to produce a coating material. The coating material was applied onto a PET film using a #4 bar coater, and dried at 120°C for 1 minute to form a film. Properties of the film are shown in Table 6.

### (Example 12)

To 60 g of the PEDOT-PSS solution obtained in Production Example 11 were added 10 g of KS-3703 (N.V 30% produced by Shin-Etsu Chemical Co., Ltd.) and 30 g of methyl ethyl ketone, and added 0.3 g of CAT-PL-50T (produced by Shin-Etsu Chemical Co., Ltd.), to produce a coating material. The coating material was applied onto a PET film using a #4 bar coater, and dried at 120°C for 1 minute to form a film. Properties of the film are shown in Table 6.

### (Examples 13 to 106)

To 60 g of each PEDOT-PSS solution obtained in Production Example 12, corresponding to each material shown in Table 1, were added 10 g of KS-3703 (N.V 30% produced by Shin-Etsu Chemical Co., Ltd.) and 30 g of methyl ethyl ketone, and added 0.3 g of CAT-PL-50T (produced by Shin-Etsu Chemical Co., Ltd.), to produce each coating material. Each coating material was applied onto a PET film using a #4 bar coater, and dried at 120°C for 1 minute to form each film. Properties of each film are shown in Table 6 and Table 7.

**[Table 6]**

| | Surface resistivity (Ω/□) | Room temp./after 20 hours | | 85 degrees C./after 20 hours | |
|---|---|---|---|---|---|
| | | Peeling force (N/25mm) | Residual adhesiveness rate (%) | Peeling force (N/25mm) | Residual adhesiveness rate (%) |
| Example 10 | 1×10⁹ | 0.07 | 96 | 0.18 | 91 |
| Example 11 | 3×10⁹ | 0.08 | 97 | 0.13 | 89 |
| Example 12 | 5×10⁹ | 0.07 | 97 | 0.2 | 90 |
| Example 13 | 8×10⁹ | 0.07 | 98 | 0.24 | 88 |
| Example 14 | 7×10⁸ | 0.07 | 98 | 0.32 | 92 |
| Example 15 | 3×10⁸ | 0.07 | 99 | 0.22 | 91 |
| Example 16 | 1×10⁸ | 0.08 | 99 | 0.23 | 90 |
| Example 17 | 8×10⁸ | 0.09 | 99 | 0.24 | 90 |
| Example 18 | 2×10⁹ | 0.09 | 98 | 0.25 | 91 |
| Example 19 | 4×10⁹ | 0.08 | 97 | 0.23 | 90 |
| Example 20 | 8×10⁹ | 0.08 | 97 | 0.24 | 91 |
| Example 21 | 5×10⁹ | 0.07 | 97 | 0.25 | 91 |
| Example 22 | 7×10⁸ | 0.07 | 99 | 0.18 | 91 |
| Example 23 | 7×10⁸ | 0.08 | 99 | 0.18 | 93 |
| Example 24 | 1×10⁹ | 0.08 | 96 | 0.27 | 91 |
| Example 25 | 8×10⁹ | 0.08 | 97 | 0.26 | 89 |
| Example 26 | 5×10⁸ | 0.09 | 99 | 0.28 | 89 |
| Example 27 | 9×10⁸ | 0.07 | 99 | 0.27 | 88 |
| Example 28 | 5×10⁹ | 0.07 | 99 | 0.27 | 87 |
| Example 29 | 9×10⁸ | 0.08 | 98 | 0.23 | 90 |
| Example 30 | 2×10⁹ | 0.07 | 97 | 0.22 | 90 |
| Example 31 | 3×10⁸ | 0.07 | 97 | 0.22 | 93 |
| Example 32 | 3×10⁸ | 0.11 | 97 | 0.21 | 90 |
| Example 33 | 6×10⁸ | 0.07 | 99 | 0.26 | 92 |
| Example 34 | 8×10⁹ | 0.07 | 96 | 0.23 | 91 |
| Example 35 | 1×10⁹ | 0.07 | 97 | 0.32 | 90 |
| Example 36 | 2×10⁹ | 0.08 | 97 | 0.22 | 90 |
| Example 37 | 2×10⁹ | 0.07 | 98 | 0.23 | 91 |
| Example 38 | 8×10⁸ | 0.07 | 98 | 0.24 | 90 |
| Example 39 | 5×10⁸ | 0.07 | 99 | 0.25 | 91 |
| Example 40 | 2×10⁹ | 0.1 | 99 | 0.29 | 91 |
| Example 41 | 4×10⁹ | 0.09 | 99 | 0.24 | 90 |
| Example 42 | 8×10⁹ | 0.09 | 98 | 0.2 | 90 |
| Example 43 | 5×10⁹ | 0.07 | 97 | 0.16 | 91 |
| Example 44 | 7×10⁸ | 0.07 | 97 | 0.17 | 90 |
| Example 45 | 7×10⁸ | 0.07 | 97 | 0.32 | 91 |
| Example 46 | 1×10⁹ | 0.07 | 99 | 0.08 | 92 |
| Example 47 | 8×10⁹ | 0.09 | 96 | 0.21 | 91 |
| Example 48 | 3×10⁹ | 0.08 | 97 | 0.25 | 93 |
| Example 49 | 6×10⁸ | 0.09 | 98 | 0.24 | 91 |
| Example 50 | 4×10⁸ | 0.09 | 98 | 0.25 | 88 |
| Example 51 | 7×10⁸ | 0.08 | 99 | 0.26 | 87 |
| Example 52 | 6×10⁸ | 0.08 | 97 | 0.27 | 88 |
| Example 53 | 2×10⁹ | 0.07 | 98 | 0.29 | 88 |
| Example 54 | 5×10⁸ | 0.07 | 98 | 0.23 | 89 |
| Example 55 | 5×10⁹ | 0.07 | 99 | 0.32 | 90 |
| Example 56 | 3×10⁸ | 0.07 | 99 | 0.22 | 90 |
| Example 57 | 3×10⁸ | 0.08 | 99 | 0.23 | 91 |
| Example 58 | 6×10⁸ | 0.07 | 98 | 0.24 | 90 |
| Example 59 | 8×10⁹ | 0.07 | 99 | 0.25 | 91 |
| Example 60 | 1×10⁹ | 0.08 | 99 | 0.23 | 91 |
| Example 61 | 5×10⁸ | 0.09 | 96 | 0.24 | 91 |
| Example 62 | 9×10⁸ | 0.09 | 97 | 0.2 | 93 |

**[Table 7]**

| | Surface resistivity (Ω/□) | Room temp./after 20 hours | | 85 degrees C./after 20 hours | |
|---|---|---|---|---|---|
| | | Peeling force (N/25mm) | Residual adhesiveness rate (%) | Peeling force (N/25mm) | Residual adhesiveness rate (%) |
| Example 63 | 5×10⁹ | 0.08 | 99 | 0.19 | 91 |
| Example 64 | 9×10⁸ | 0.08 | 98 | 0.33 | 89 |
| Example 65 | 2×10⁹ | 0.07 | 98 | 0.34 | 89 |
| Example 66 | 3×10⁸ | 0.07 | 98 | 0.18 | 88 |
| Example 67 | 3×10⁸ | 0.08 | 98 | 0.18 | 87 |
| Example 68 | 6×10⁸ | 0.08 | 98 | 0.27 | 90 |
| Example 69 | 1×10⁸ | 0.08 | 97 | 0.26 | 90 |
| Example 70 | 8×10⁸ | 0.09 | 97 | 0.28 | 91 |
| Example 71 | 2×10⁹ | 0.07 | 95 | 0.27 | 90 |
| Example 72 | 2×10⁹ | 0.07 | 98 | 0.27 | 90 |
| Example 73 | 8×10⁸ | 0.09 | 97 | 0.23 | 91 |
| Example 74 | 1×10⁹ | 0.08 | 97 | 0.22 | 91 |
| Example 75 | 2×10⁹ | 0.09 | 97 | 0.22 | 89 |
| Example 76 | 8×10⁸ | 0.09 | 99 | 0.21 | 90 |
| Example 77 | 7×10⁸ | 0.08 | 96 | 0.26 | 90 |
| Example 78 | 1×10⁸ | 0.08 | 97 | 0.18 | 91 |
| Example 79 | 1×10⁸ | 0.08 | 98 | 0.18 | 90 |
| Example 80 | 3×10⁹ | 0.09 | 98 | 0.27 | 91 |
| Example 81 | 5×10⁸ | 0.09 | 99 | 0.26 | 91 |
| Example 82 | 4×10⁹ | 0.08 | 97 | 0.28 | 89 |
| Example 83 | 3×10⁹ | 0.08 | 98 | 0.27 | 88 |
| Example 84 | 3×10⁸ | 0.07 | 98 | 0.27 | 87 |
| Example 85 | 7×10⁸ | 0.07 | 97 | 0.23 | 91 |
| Example 86 | 4×10⁹ | 0.08 | 99 | 0.22 | 90 |
| Example 87 | 4×10⁹ | 0.08 | 96 | 0.22 | 93 |
| Example 88 | 2×10⁹ | 0.08 | 97 | 0.21 | 90 |
| Example 89 | 4×10⁹ | 0.08 | 97 | 0.26 | 88 |
| Example 90 | 8×10⁹ | 0.08 | 98 | 0.23 | 89 |
| Example 91 | 3×10⁸ | 0.08 | 98 | 0.32 | 90 |
| Example 92 | 3×10⁸ | 0.08 | 99 | 0.22 | 90 |
| Example 93 | 6×10⁸ | 0.08 | 99 | 0.23 | 94 |
| Example 94 | 1×10⁸ | 0.07 | 99 | 0.24 | 90 |
| Example 95 | 8×10⁸ | 0.07 | 98 | 0.34 | 88 |
| Example 96 | 5×10⁹ | 0.08 | 94 | 0.29 | 88 |
| Example 97 | 1×10⁸ | 0.07 | 98 | 0.27 | 88 |
| Example 98 | 3×10⁹ | 0.07 | 99 | 0.27 | 89 |
| Example 99 | 5×10⁸ | 0.08 | 97 | 0.26 | 89 |
| Example 100 | 4×10⁹ | 0.09 | 98 | 0.28 | 88 |
| Example 101 | 2×10⁹ | 0.09 | 98 | 0.29 | 89 |
| Example 102 | 6×10⁸ | 0.08 | 97 | 0.32 | 89 |
| Example 103 | 4×10⁸ | 0.08 | 96 | 0.33 | 90 |
| Example 104 | 7×10⁸ | 0.07 | 97 | 0.36 | 93 |
| Example 105 | 5×10⁹ | 0.07 | 98 | 0.18 | 93 |
| Example 106 | 2×10⁹ | 0.08 | 98 | 0.25 | 91 |

### <Evaluation results>

The water-insoluble reaction product (precipitate) obtained in Production Example 3 was dissolved in methyl ethyl ketone. In addition, a dispersion liquid of about 1% by mass of PEDOT-PSS, in which this precipitate was dissolved in MEK, was diluted with twice its amount of distilled water, and the pH was measured by a simple pH meter AS212 (manufactured by Horiba Ltd.) and was found to be 6.8. On the other hand, to the dispersion liquid of 1.2% by mass of PEDOT-PSS, obtained in Production Example 2, was added three times its amount of distilled water, and the pH was measured in the same manner and was found to be 2.1. It was considered from this that the precipitate was obtained by reacting at least a polyanion and an epoxy compound. It was also found from the same measurement that each of the precipitates obtained in Production Examples 4 to 12 was also a product derived from a reaction of an anion with an oxirane group and/or oxetane group-containing organic compound. Each of the films obtained in Examples 1 to 106 exhibited a high conductivity, and was excellent in peeling force and residual adhesiveness rate at room temperature or 85°C after a lapse of 20 hours. On the contrary, in Comparative Examples 1 to 3, PEDOT-PSS was aggregated or separated and could not be even dispersed in a silicone resin, and each of the films could not be thus evaluated.

### Industrial applicability

The present invention can be effectively utilized in, for example, peeling paper, an antistatic film, a conductive coating material, a touch screen, organic EL, and a conductive polymer fiber.

## Claims

1. A curable antistatic organopolysiloxane composition comprising:
a conductive polymer composition (I) that comprises:
(a) a π-conjugated conductive polymer,
(b) a polyanion with which the π-conjugated conductive polymer (a) is doped, and
(c) a reaction product of an anion other than the anion required for doping in the polyanion (b) with an oxirane group and/or oxetane group-containing organic compound, and
that is dispersible and soluble in a solvent mainly containing an organic solvent; and
a curable organopolysiloxane composition (II).

2. The curable antistatic organopolysiloxane composition of claim 1, wherein the curable organopolysiloxane composition (II) is an addition curing type composition.

3. The curable antistatic organopolysiloxane composition of claim 1, wherein the curable organopolysiloxane composition (II) is a condensation curing type composition.

4. The curable antistatic organopolysiloxane composition of claim 1, wherein the curable organopolysiloxane composition (II) is an electron beam curing type composition.

5. The curable antistatic organopolysiloxane composition of any one of claim 1 to claim 4, wherein the π-conjugated conductive polymer (a) has at least one or more repeating unit selected from the group consisting of polypyrroles, polythiophenes, polyacetylenes, polyphenylenes, polyphenylenevinylenes, polyanilines, polyacenes, polythiophenevinylenes, and copolymers of two or more thereof.

6. The curable antistatic organopolysiloxane composition of claim 5, wherein the π-conjugated conductive polymer (a) is poly(3,4-ethylenedioxythiophene) or polypyrrole.

7. The curable antistatic organopolysiloxane composition of any one of claim 1 to claim 6, wherein the polyanion (b) comprises one or a mixture of two or more selected from a sulfonic acid group, a phosphoric acid group and a carboxyl group.

8. The curable antistatic organopolysiloxane composition of any one of claim 1 to claim 7, wherein the polyanion (b) comprises polystyrenesulfonic acid, polyvinylsulfonic acid, polyacrylic acid alkylenesulfonic acid, poly(2-acrylamido-2-methyl-1-propanesulfonic acid), or one or more thereof as a copolymerization constituent.

9. The curable antistatic organopolysiloxane composition of any one of claim 1 to claim 8, further comprising an organic solvent.

10. An antistatic silicone film formed by supplying the curable antistatic organopolysiloxane composition of any one of claim 1 to claim 9 on a substrate and curing the composition.
